# EUROPEAN PATENT SPECIFICATION

(11) **EP 2 340 754 B1**
(45) Date of publication and mention of the grant of the patent: **17.10.2012**
(21) Application number: 10014764.4
(22) Date of filing: 18.11.2010
(51) Int. Cl.: A47J 43/08, A47J 43/046

(54) **Device for the production of milk froth or the like**
Vorrichtung zur Produktion von Milchschaum oder dergleichen
Dispositif de production de mousse de lait ou similaire

(30) Priority: 20.11.2009 IT GE20090090
(43) Date of publication of application: 06.07.2011
(73) Proprietor: Espressocap S.p.A., 20010 Bareggio (MI) (IT)
(72) Inventor: Bardazzi, Bruno, 50037 S. Piero a Sieve FI (IT); Doria, Alessandro, 20147 Milano MI (IT)
(74) Representative: Cacciamani, Clizia

(56) References cited:
- WO-A1-2009/135758
- US-A1- 2007 144 358
- US-A1- 2007 165 485

## Description

The present invention relates to devices for the preparation and treatment of food, and particularly it relates to devices for the treatment of drinks, and more particularly it relates to a device for the production of milk froth and the like.

Milk froth has a particular aesthetic and gustatory appeal in the preparation of hot drinks, both in cafes and at home. Of course there are several devices designed to prepare this extemporary product, based on completely different methods and leading to completely different results.

Generally there are two main operational approaches: one of these approaches uses steam to produce milk froth since this fluid, produced under pressure by a suitable boiler, provides both the dispersant, i.e. the steam itself, and the heat required to promote the production of milk froth. Unfortunately, the use of these systems is often not so practical and, however, some familiarity with steam sources is required. The other approach, exemplified by US 2007/165485 A1, includes beating means which are arranged within a container, preferably a heated container, and variously coupled to driving means, either manual or electrical. In this latter type of devices, the mode of connection to the beating means becomes very important, since any structural complication in this type of devices results in a cumbersome manufacture and a troublesome utilization.

An aim of the present invention is to provide a device of the above-described type in which the connection of the beating means to the driving means is made in a very simple way both structurally and functionally.

More generally, a further aim of the present invention is to provide a coupling system for kitchen appliances which is easy to be made and ready to be used by users.

Therefore, an object of the present invention is a device for the production of milk froth, comprising a container vessel, a beating tool coupled to transmission means of suitable driving means; the transmission means comprises a shaft which sealingly rotates inside the container vessel, said shaft being coupled to the beating tool by means of a key-type fit and magnetic locking means. The key-type fit is formed by coupling a non-circular section of the hole of the tool to a corresponding non-circular section of the transmission shaft.

In a preferred embodiment, said magnetic locking means comprises a magnet located at the free end of said shaft, said magnet cooperating with a member arranged along the same axis inside said tool.

Another object of the invention is a system for coupling driving means to tools in small kitchen appliances, said appliances comprising a process vessel, a tool coupled to transmission means of suitable driving means; the transmission means comprises a shaft which sealingly rotates inside the process vessel, said shaft being coupled to the tool by means of a key-type fit and magnetic locking means.

Further advantages and features will be apparent from the following detailed description of an embodiment of the device according to the present invention, which is set out by way of illustration, and not by way of limitation, with reference to the accompanying drawing wherein:
Figure 1 is a schematic, longitudinal sectional view of an embodiment of the device according to the present invention; and
Figure 2 is a sectional view taken along the line II-II of Figure 1.

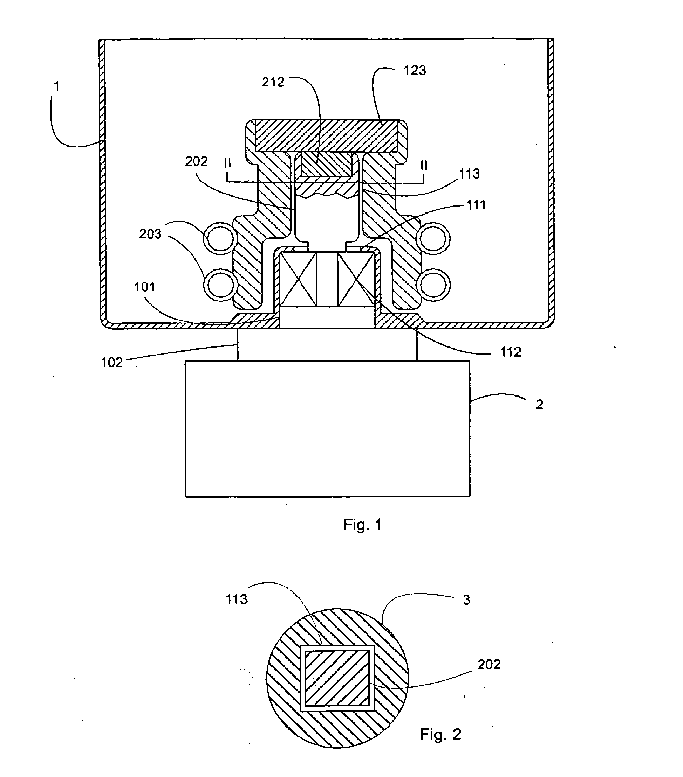

Figure 1 is a schematic illustration of an embodiment of the device according to the invention; reference numeral 1 denotes the process vessel of the device for the production of milk forth according to the present invention. Said vessel has an outwardly facing substantially cylindrical cavity 101 to which the hub 102 of a driving assembly, i.e. the gear-motor 2, is coupled. The hub is provided with sealing means 112 and a shaft 202 at the free end thereof, the shaft passing through the through-hole 111 at the bottom of the cavity and allowing the gear-motor 2 to be coupled to the tool 3 which is located inside the process vessel 1. As for the motion transmission, the coupling is made by inserting the shaft 202 into the bushing 113 at the bottom of the cavity 103 of the tool 3. As it can be noted from Figure 2, the bushing 113 has a square cross-section substantially corresponding to the cross-section of the shaft 202, and this allows the tool 3 to be rotationally coupled to the gear-motor 2. At the free end of the shaft 202 is a permanent magnet 212 which is coupled to the magnet 123 at the bottom of the bushing 113 of the tool 3. The portion of the tool facing toward the bottom of vessel 1 has metal spiral rings 203 which are fixedly connected to the outer wall of the tool itself.

The operating principle of the device according to the present invention will become apparent from the following. The vessel 1 is positioned onto the hub 102, and the shaft 202 projects from the hole 111 so that it can be coupled to the tool 3 by inserting the shaft 202 into the square cross-sectioned bushing 113. The coupling is assured by magnets 212 and 123 located on the shaft and beating tool 3, respectively. When the motor is running, spirals 203 can suitably shake the milk in order to produce froth.

The so-designed device is very simple in construction and allows the gear-motor to be fixedly coupled to and easily released from the tool. Of course, it is apparent that this type of coupling is advantageous for devices designed for this specific task, however it is also to be considered applicable to other household appliances having similar operating specifications.

## Claims

1. A device for the production of milk froth, comprising a container vessel (1), a beating tool (3) coupled to transmission means (102, 202) of suitable driving means, **characterized in that** the transmission means comprises a haft (202) which sealingly rotates inside the container vessel (1), **characterised by** said shaft (202) being coupled to the beating tool (3) by means of a key-type fit and magnetic locking means (123, 212).

2. The device according to claim 1. wherein the key-type fit is formed by coupling a non-circular section of an axial hole (113) formed in the tool (3) to a corresponding non-circular section of the transmission shaft (202).

3. The device according to claim 1 or 2, wherein said magnetic locking means comprises a magnet (212) located at the free end of said shaft (202), said magnet (212) cooperating with a member (123) arranged along the same axis inside said tool (3).

4. A system for coupling driving means to tools in small kitchen appliances, said appliances comprising a process vessel (1), a tool (3) coupled to transmission means (102, 202) of suitable driving means (2), **characterized in that** said transmission means comprises a shaft (202) which sealingly rotates inside the process vessel (1), said shaft (202) being coupled to the tool (3) by means of a key-type fit and magnetic locking means (123, 212).

## Patentansprüche

1. Vorrichtung zur Herstellung von Milchschaum, mit einem Aufnahmebehälter (1), ein Schlagwerkzeug (3) gekoppelt mit der Übertragungmittel (102, 202) für geeignete Antriebsmittel (2), **dadurch gekennzeichnet daß** die Übertragungsmittel besteht aus eine Welle (202), der dichtend dreht sich Innerhalb des Aufnahmebehälter (1), wobei die Welle (202) mit dem Schlagwerkzeug (3) mittels eines Schlüssel-Typ Anfall und magnetische Verriegelung (123, 212) gekoppelt ist.

2. Vorrichtung nach Anspruch 1 **dadurch gekennzeichnet**, wobei der Schlüssel-Typ Sitz wird durch Kopplung eines nichtkreisförmigen Querschnitt einer axialen Bohrung (113) in dem Werkzeug (3) ausgebildet zu einer entsprechenden nichtkreisförmigen Querschnitt der Übertragungswelle (202).

3. Vorrichtung nach Anspruch 1 oder 2 **dadurch gekennzeichnet, dass** magnetische Verriegelungsmittel besteht aus ein Magnet (212) am freien Ende der Welle (202) gelegen, wobei der Magnet (212) kooperiert mit einem Element (123), der entlang der gleichen Achse innen das Werkzeug (3) angeordnet ist.

4. System zum Koppeln Antriebsmittel mit einem Werkzeug in kleine Haushaltsgeräte, wobei Geräte mit einem Prozeßbehälter (1), ein Werkzeug (3), der mit Übertragungsmittein (102, 202) geeignete Antriebsmittel (2) gekoppelt is, **dadurch gekennzeichnet daß** die Übertragungsmittel besteht aus eine Welle (202), der dichtend dreht sich innerhalb des Aufnahmebehälter (1), wobei die Welle (202) mit dem Werkzeug (3) mittels eines Schlüssel-Typ Anfall und magnetische Verriegelung (123, 212) gekoppelt ist.

## Revendications

1. Un appareil pour la production de mousse de lait, comprenant une cuve (1), un batteur (3) couplé aux moyens de transmission (102) des moyens moteurs adaptés (2), **caracterisé en ce que** les moyens de transmission comprennent un arbre (202) qui tourne étanche dedans la dite cuve (1), le dit arbre (202) étant couplé au batteur (3) par un montage a clé ed des moyens de blocage magnetiques (123, 212).

2. L'appareil selon la révendication 1, dont le montage a clé est formé par le couplage d'une section non circulaire d'un trou axial (113) formé dans le batteur (3) avec une correspondante section non circulaire de l'arbre de transmission (202).

3. L'appareil selon la révendication 1 ou 2, dont les dits moyens de blocage magnetiques comprennent un aimant (212) situé à l'extremité libre du dit arbre (202), le dit aimant (212) cooperant avec un élément arrangé le long du même axe à l'intérieur du dit batteur (3).

4. Un système de couplage des moyens d'entrainement avec des outils dans les petits appareils de cuisine, les dits appareils comprenant une cuve d'opération (1), un outil (3), couplé avec les moyens de transmission (102, 202) des moyens moteurs adaptés (2) **caracterisé en ce que** les moyens de transmission comprennent un arbre (202) qui tourne étanche dédans la dite cuve d'opération (1), le dit arbre (202) étant couplé à l'outil (3) par un montage a clé ed des moyens de blocage magnétiques (123, 212).
